# EUROPEAN PATENT APPLICATION

(11) **EP 2 293 137 A1**
(43) Date of publication of application: **09.03.2011**
(21) Application number: 10171037.4
(22) Date of filing: 28.07.2010
(51) Int. Cl.: G02F 1/133, G02F 1/139

(54) **Liquid crystal shutter device and picture display system**

(30) Priority: 07.08.2009 JP 2009185085
(71) Applicant: Sony Corporation, Tokyo (JP)
(72) Inventor: Ogawa, Ryo, TOKYO (JP); Nakahata, Yuji, TOKYO (JP); Suzuki, Toshiaki, TOKYO (JP)
(74) Representative: Thévenet, Jean-Bruno

(57) **Abstract**

A liquid crystal shutter glass includes: two shutter mechanisms (6L, 6R) and a drive section (64). Each of the shutter mechanisms (6L, 6R) includes a liquid crystal device (65) and is configured so as to alternately perform an opening action and a closing action in a time-divisional manner, the opening action allowing incident light to pass through corresponding one of the shutter mechanisms (6L, 6R), the closing action allowing the incident light to be blocked. The drive section (64) controls a switching operation between the opening action and the closing action for each of the shutter mechanisms (6L, 6R), while driving the liquid crystal device (65) in each of the shutter mechanisms (6L, 6R) by means of a polarity inversion method in which a polarity of a drive voltage is alternately inverted. The drive section (64) inverts the polarity of the drive voltage in a period of the opening action.

## Description

### BACKGROUND OF THE INVENTION

### 1. Field of the Invention

The present invention relates to a liquid crystal shutter device configured by using a liquid crystal shutter mechanism which performs an opening action and a closing action, and a picture display system using such a liquid crystal shutter device.

### 2. Description of the Related Art

In recent years, as displays for flat-screen televisions and portable terminals, active matrix liquid crystal displays (LCDs) in which TFTs (Thin Film Transistors) are arranged for pixels, respectively, are often used. In such a liquid crystal display, typically, pixels are individually driven by line-sequentially writing a picture signal to auxiliary capacitive elements and liquid crystal devices of the pixels from the top to the bottom of a screen.

In the liquid crystal display, depending on applications, a drive (hereinafter referred to as time-division drive) for dividing one frame period into a plurality of periods and displaying different pictures in the respective periods is performed. Examples of a liquid crystal display using such a time-division drive system include a liquid crystal display using a field sequential system, a stereoscopic picture display system using a shutter device as described in Japanese Unexamined Patent Application Publication No. 2000-4451, and the like.

In the stereoscopic picture display system using the shutter device, one frame period is divided into two periods, and two pictures which have a parallax therebetween as a picture-for-right-eye and a picture-for-left-eye are alternately displayed. Moreover, a shutter device performing an opening action and a closing action in synchronization with switching of the pictures are used. The shutter device is controlled so that a left-eye lens is opened (a right-eye lens is closed) in a picture-for-left-eye displaying period and the right-eye lens is opened (the left-eye lens is closed) in a picture-for-right-eye period. When a viewer wearing such a shutter device watches display pictures, stereoscopic vision is achieved.

In such a shutter device, a shutter mechanism performing an opening action and a closing action is typically configured by using a liquid crystal device (a liquid crystal cell) (a liquid crystal shutter device), In such a liquid crystal shutter as in the casa of a liquid crystal display using a liquid crystal device in related art, to prevent a burn-in effect on a liquid crystal, or the like, in a polarity inversion method in which a drive voltage of positive polarity and a drive voltage of negative polarity are alternately applied to a liquid crystal device is often performed as described in, for example, Japanese Unexamined Patent Application Publication No. 2007-148054.

### SUMMARY OF THE INVENTION

However, in such a liquid crystal shutter mechanism, for example, in the case where an OCB (Optically Compensated Bend) mode liquid crystal device with fast response and wide viewing angle characteristics is used, when a polarity inversion method is performed, the following issue may occur. First, in the OCB mode liquid crystal device, it is necessary to apply a drive voltage in both of a white state (a transmission state, an open state) and a black state (a blocking state, a close state). For example, when the polarity of the drive voltage is inverted in a period of the close state, flickers easily occur.

Flickers occur because of the following reason. First, when the polarity of the drive voltage is inverted in the period of the close state (a period of a dousing action), a region where the gradient of applied voltage-transmittance characteristics is steep is used, thereby an influence such as deviation of a common voltage occurs. When the OCB mode liquid crystal device is changed to the open state, such an influence causes an increase in difference in an applied voltage to the liquid crystal device between polarities (a positive polarity and a negative polarity). When the difference in such an applied voltage between polarities is increased, a difference in luminance between polarities (a difference in transmittance of light) is increased, thereby to easily cause the above-described flickers. In addition, the above-described issue may commonly occur irrespective of modes of liquid crystal devices in liquid crystal shutter mechanisms or kinds of picture displays.

It is desirable to provide a liquid crystal shutter device allowed to reduce flickers when viewing a picture, and a picture display system using such a liquid crystal shutter device.

According to an embodiment of the invention, there is provided a liquid crystal shutter device including: two shutter mechanisms each inducing a liquid crystal device and configured so as to alternately perform an opening action and a closing action in a time-divisional manner, the opening action allowing incident light to pass through corresponding one of the shutter mechanisms, the closing action allowing the incident light to be blocked; and a drive section controlling a switching operation between the opening action and the closing action for each of the shutter mechanisms, while driving the liquid crystal device in each of the shutter mechanisms by means of a polarity inversion method in which a polarity of a drive voltage is alternately inverted. The drive section inverts the polarity of the drive voltage in a period of the opening action.

According to an embodiment of the invention, there is provided a picture display system including a picture display performing, in a time-divisional manner, a switching of a plurality of picture streams to select one of the picture streams and performs picture display based on the selected picture stream, and the liquid crystal shutter device according to the above-described embodiment of the invention performing an opening action and a closing action in synchronization with the switching of the plurality of picture streams in the picture display.

In the liquid crystal shutter device and the picture display system according to the embodiment of the invention, the drive section controls a switching operation between the opening action and the closing action for each of the shutter mechanisms, while driving the liquid crystal device in each of the shutter mechanisms by means of a polarity inversion method in which a polarity of a drive voltage is alternately inverted. At this time, the drive section inverts the polarity of a drive voltage in a period of the opening action. Thereby, compared to the case where the polarity of a drive voltage is inverted in a period of the closing action, in periods of the opening action for each shutter mechanism, a difference in a voltage (an applied voltage) applied to the liquid crystal device between polarities (a polarity and a negative polarity) is reduced.

In the liquid crystal shutter device and the picture display system according to the embodiment of the invention, the polarity of a drive voltage ins inverted in the period of the opening action, so in the period of the opening action for each shutter mechanism, a difference in a voltage applied to the liquid crystal device between polarities is allowed to be reduced. Therefore, flickers occurring when viewing a picture through the liquid crystal shutter device are allowed to be reduced.

Other and further objects, features and advantages of the invention will appear more fully from the following description.

### BRIEF DESCRIPTION OF THE DRAWINGS

FIG. 1 is a block diagram illustrating the whole configuration of a picture display system according to a first embodiment of the invention.

FIG. 2 is a circuit diagram illustrating a specific configuration example of a pixel illustrated in FIG. 1.

FIGs. 3A and 3B are perspective views illustrating a schematic configuration example of a liquid crystal device in a shutter device illustrated in FIG. 1.

FIG. 4 is a schematic perspective view for describing two orientation modes in an OCB mode liquid crystal device illustrated in FIG. 3B.

FIGs. 5A and 5B are schematic views briefly illustrating a stereoscopic picture display operation in the picture display system illustrated in FIG. 1.

FIGs. 6A and 6B are timing charts illustrating a polarity inversion method on a liquid crystal device of a shutter device according to a comparative example.

FIG. 7 is a plot illustrating an example of a relationship between an applied voltage and light transmittance in TN mode and OCB mode liquid crystal devices.

FIGs. 8A and 8B are timing charts illustrating an example of a polarity inversion method on a liquid crystal device of a shutter device according to an embodiment.

FIGs. 9A and 9B are timing charts illustrating another example of the polarity inversion method on the liquid crystal device of the shutter device according to the embodiment.

FIGs. 10A and 10B are schematic views briefly illustrating a multiview picture display operation in a picture display system according to a modification of the invention.

### DETAILED DESCRIPTION OF THE PREFERRED EMBODIMENTS

A preferred embodiment will be described in detail below referring to the accompanying drawings. Descriptions will be given in the following order.
1. Embodiment (An example in the case where a liquid crystal shutter device is applied to a stereoscopic picture display system)
2. Modification (An example in the case where a liquid crystal shutter device is applied to a multiview picture display system)

### Embodiment

### Whole configuration of picture display system

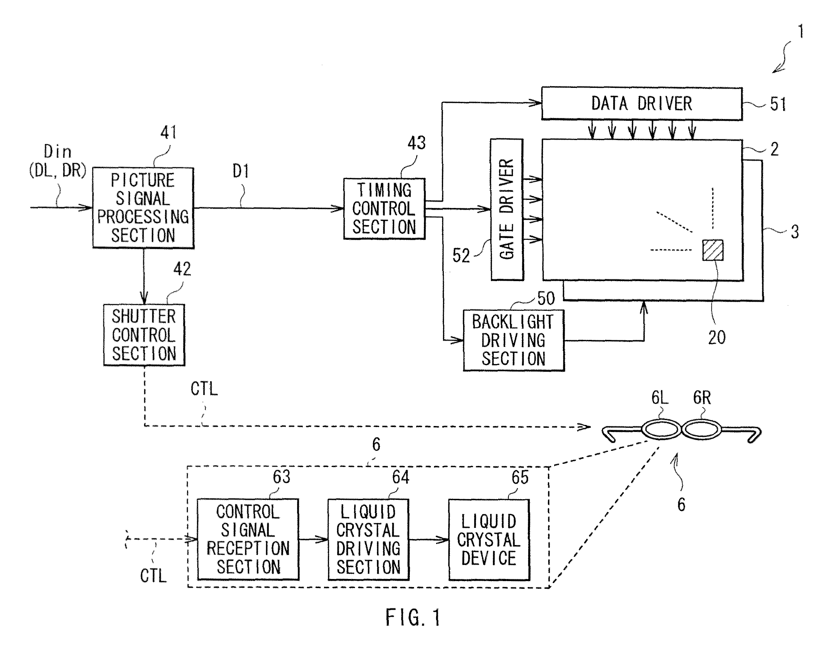

FIG. 1 illustrates a block diagram of a picture display system according to an embodiment of the invention. The picture display system is a time-division drive stereoscopic picture display system, and includes a liquid crystal display 1 as a picture display and a liquid crystal shutter device (a shutter device 6) according to an embodiment of the invention.

### Configuration of liquid crystal display 1

The liquid crystal display 1 displays a picture based on an input picture signal Din including a right-eye picture signal DR (a signal of a picture stream for right eye) and a left-eye picture signal DL (a signal of a picture stream for left eye) having a binocular parallax. The liquid crystal display 1 includes a liquid crystal display panel 2, a backlight 3, a picture signal processing section 41, a shutter control section 42, a timing control section 43, a backlight driving section 50, a data driver 51 and a gate driver 52.

The backlight 3 is a light source applying light to the liquid crystal display panel 2, and includes, for example, an LED (Light Emitting Diode), a CCFL (Cold Cathode Fluorescent Lamp) or the like.

The liquid crystal display panel 2 light emitted from the backlight 3 based on a picture voltage supplied from the data driver 51 in response to a drive signal supplied from the gate driver 52 which will be described later so as to display a picture based on the input picture signal Din. More specifically, as will be described in detail later, a picture-for-right-eye based on the right-eye picture signal DR and a picture-for-left-eye based on the left-eye picture signal DL are alternately displayed in a time-divisional manner. In other words, in the liquid crystal display panel 2, pictures are displayed in output order controlled by the picture signal processing section 41 which will be described later to perform a time-division drive for stereoscopic picture display. The liquid crystal display panel 2 includes a plurality of pixels 20 arranged in a matrix form as a whole.

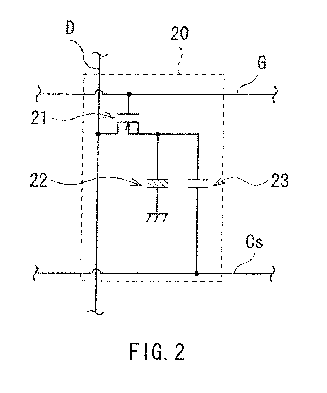

FIG. 2 illustrates a circuit configuration example of a pixel circuit in each pixel 20. The pixel 20 includes a liquid crystal device 22, a TFT (Thin Film Transistor) element 21 and an auxiliary capacitive element 23. A gate line G for line-sequentially selecting a pixel to be driven, a data line D for supplying a picture voltage (a picture voltage supplied from the data driver 51) to the pixel to be driven and an auxiliary capacity line Cs are connected to the pixel 20.

The liquid crystal device 22 performs a display operation in response to a picture voltage supplied from the data line D to one end thereof through the TFT element 21. The liquid crystal device 22 is configured by sandwiching a liquid crystal layer (not illustrated) made of, for example, a liquid crystal of a VA (Vertical Alignment) mode or TN (Twisted Nematic) mode between a pair of electrodes (not illustrated). One (one end) of the pair of electrodes in the liquid crystal device 22 is connected to a drain of the TFT element 21 and one end of the auxiliary capacitive element 23, and the other (the other end) of the pair of electrodes is grounded. The auxiliary capacitive element 23 is a capacitive element for stabilizing an accumulated charge of the liquid crystal device 22. One end of the auxiliary capacitive element 23 is connected to the one end of the liquid crystal device 22 and the drain of the TFT element 21, and the other end of the auxiliary capacitive element 23 is connected to the auxiliary capacity line Cs. The TFT element 21 is a switching element for supplying a picture voltage based on a picture signal D1 to the one end of the liquid crystal device 22 and the one end of the auxiliary capacitive element 23, and is configured of a MOS-FET (Metal Oxide Semiconductor-Field Effect Transistor). A gate and a source of the TFT element 21 are connected to the gate line G and the data line D, respectively, and the drain of the TFT element 21 is connected to the one end of the liquid crystal device 22 and the one end of the auxiliary capacitive element 23.

The picture signal processing section 41 controls output order (writing order, display order) of the right-eye picture signal DR and the left-eye picture signal DL in response to the input picture signal Din so as to produce the picture signal D1. In this case, in one frame period, the picture signal D1 is configured of the right-eye picture signals DR and the left-eye picture signals DL alternately arranged. In addition, hereinafter a picture-for-left-eye display period and a picture-for-right-eye display period of one frame period are referred to as "L sub-frame period" and "R sub-frame period", respectively.

The shutter control section 42 outputs, to the shutter device 6, a timing control signal (a control signal CTL) corresponding to output timings of the right-eye picture signal DR and the left-eye picture signal DL by the picture signal processing section 41. In addition, in this case, the control signal CTL is described as a radio signal such as, for example, an infrared signal, but may be a wired signal.

The timing control section 43 controls drive timings of the backlight driving section 50, the gate driver 52 and the data driver 51, and supplies, to the data driver 51, the picture signal D1 supplied from the picture signal processing section 41. In addition, the timing control section 43 may perform an overdrive process on the picture signal D1.

The gate driver 52 line-sequentially drives the pixels 20 in the liquid crystal display panel 2 along the above-described gate line G in response to timing control by the timing control section 43.

The data driver 51 supplies, to each of the pixels 20 of the liquid crystal display panel 2, a picture voltage based on the picture signal D1 supplied from the timing control section 43. More specifically, the data driver 51 performs D/A (digital/analog) conversion on the picture signal D1 to produce a picture signal (the above-described picture voltage) as an analog signal to output the analog signal to each of the pixels 20.

The deriving section 50 controls a lighting action (a light emission action) of the backlight 3 in response to timing control by the timing control section 43. However, in the embodiment, such a lighting action (light emission action) of the backlight 3 may not be controlled.

### Configuration of shutter devise 6

When a viewer (not illustrated in FIG. 1) of the liquid crystal display 1 wears the shutter device 6, stereoscopic vision is achieved. The shutter devise 6 includes a left-eye shutter 6L and a right-eye shutter 6R corresponding to a specific example of "a mechanism" in the invention. Liquid crystal shutters (light-shielding shutters) each using a liquid crystal device 65 which will be described later are arranged on the left-eye shutter 6L and the right-eye shutter 6R, respectively. An effective state (an open state, a transmission a white state) and an ineffective state (a douse state, a blocking state, a black state) of an incident light-shielding function in each of the light-shielding shutters are controlled by the control signal CTL supplied from the shutter control section 42 in a time-divisional manner. In addition, in the embodiment, a liquid crystal shutter configuring shutter device is a liquid crystal device of a so-called normally white mode in which a closing state appears under an application of voltage and an opening state appears under no application voltage.

More specifically, the shutter control section 42 controls the shutter device 6 so as to alternately change the open/close states of the left-eye shutter 6L and the right-eye shutter 6R in synchronization with switching of the picture-for-left-eye and the picture-for-right-eye. In other words, in the L sub-frame period, the shutter device 6 is controlled so that the left-eye shutter 6L and the right-eye shutter 6R are changed to the open state and the close state, respectively, and in the R sub-frame period, the shutter device 6 is controlled so that the right-eye shutter 6R and the left-eye shutter 6L are changed to the open state and the close state, respectively. Thereby, in a time-division drive system in which one frame period is divided into two sub-periods and the picture-for-right-eye and the picture-for-left-eye are alternately displayed, the picture-for-right-eye and the picture-for-arse viewed with the right eye and the left eye, respectively.

Such a shutter devise 6 includes a control signal reception section 63, a liquid crystal device driving section 64 and the liquid crystal device 65.

The control signal reception section 63 receives the control signal CTL supplied from the shutter control section 42, and supplies the control signal CTL to the liquid crystal device driving section 64.

The liquid crystal device driving section 64 controls a switching operation between an opening action and a closing action for each light-shielding shutter, while driving the liquid crystal device 65 configuring the light-shielding shutter in each of the left-eye shutter 6L and the right-eye shutter 6R in response to the control signal CTL supplied from the control signal reception section 63. At this time, the liquid crystal device driving section 64 performs a polarity inversion method in which the polarity (a positive polarity and a negative polarity) of a drive voltage applied to each of the liquid crystal devices 65 in the left-eye shutter 6L and the right-eye shutter 6R is alternately inverted for the purpose of preventing a burn-in effect on a liquid crystal, or the like as in the case of a liquid crystal display in related art. Moreover, as will be described in detail later, the liquid crystal device driving section 64 inverts the polarity of the drive voltage at least in a period of the opening action where the left-eye shutter 6L or the right-eye shutter 6R is in the open state (the light-shielding shutter performs an opening action).

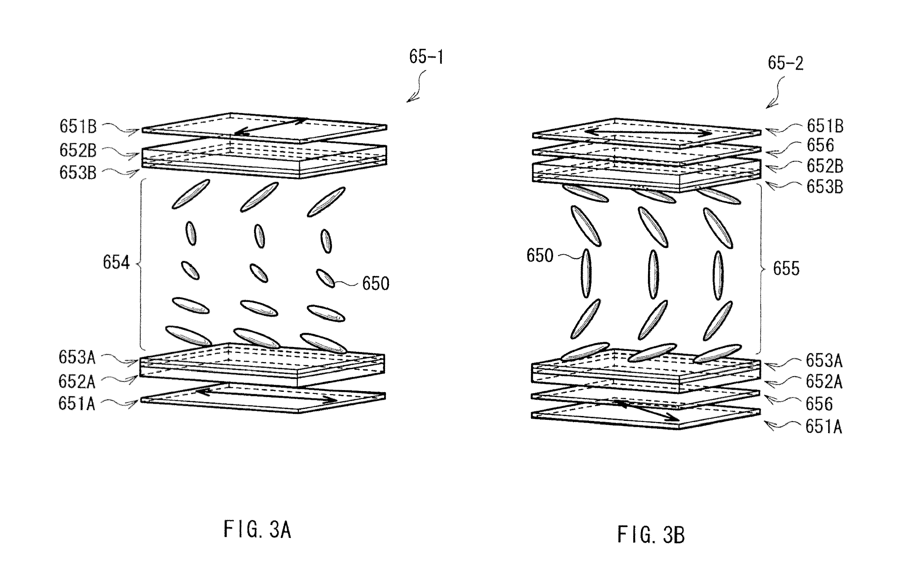

The liquid crystal device 65 is configured of a liquid crystal device 65-1 with use of a liquid crystal of a TN mode or an STN (Super Twisted Nematic) mode as illustrated in FIG. 3A, a liquid crystal device 65-2 with use of a liquid crystal of an OCB mode illustrated in FIG. 3B, or the like. A TN (STN) mode liquid crystal layer 654 and an OCB mode liquid crystal layer 655 including liquid crystal molecules 650 are arranged between a pair of electrodes 652A and 652B (a common electrode and a pixel electrode) in the liquid crystal devices 65-1 and 65-2, respectively. Moreover, an alignment film 653A and an alignment film 653B are arranged between the electrode 652A and the liquid crystal layer 654 or 655 and between the electrode 652B and the liquid crystal layer 654 or 655, respectively. A polarizing plate 651A is arranged on a side, opposite to a side where the liquid crystal layer 654 or 655 is arranged, of the electrode 652A, and a polarizing plate 651B is arranged on a side, opposite to a side where the liquid crystal layer 653 or 655 is arranged, of the electrode 6528. In addition, specifically in the OCB mode liquid crystal device 65-2, an optical compensation film 656 is further arranged each between the electrode 652B and the polarizing plate 651B and between the electrode 652A and the polarizing plate 651A.

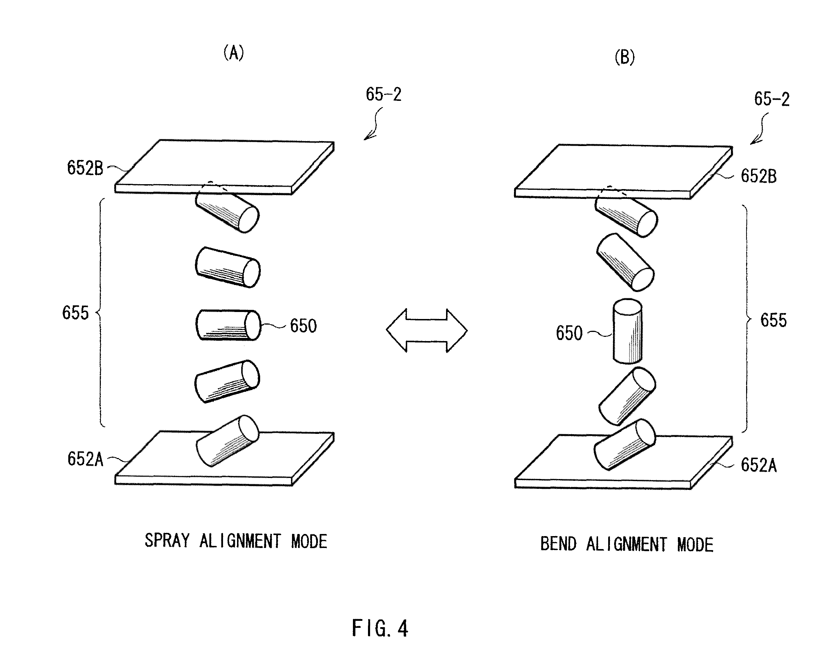

Moreover, in the OCB mode liquid crystal device 65-2, as illustrated ion parts A and B in FIG.4, there are two alignment modes (a spray alignment mode and a bend alignment mode) in which the alignment states of the liquid crystal molecules 650 are different from each other. More specifically, as a voltage applied to the liquid crystal layer 655 through the electrodes 652A and 652B increases, alignment transition from the spray alignment mode illustrated in the part A in FIG. 4 to the bend alignment mode illustrated in the part B in FIG. 4 occurs. Further, even after the alignment transition to the bend alignment mode, in the case where a non-voltage application state continues, the liquid crystal molecules 650 gradually transit back from the bend alignment mode to the spray alignment mode. In the shutter device 6 in the embodiment, in the case where the OCB mode liquid crystal device 65-2 is used, fast response and wide viewing angle characteristics are obtained, so as will be described in detail later, the open state and the close state of the light-shielding shutter are achieved by the bend alignment mode. In addition, basically, the case where the liquid crystal device 65 is configured of such an OCB mode liquid crystal device 65-2 will be described hereinafter.

### Functions and effects of picture display system

Next, functions and effects of the picture display system according to the embodiment will be described below.

### 1. Stereoscopic picture display operation

First, a stereoscopic picture display operation in the picture display system will be briefly described referring to FIGs. 1, 2, 5A and 5B.

In the picture display system, as illustrated in FIG. 1, in the liquid crystal display 1, first, the picture signal processing section 41 controls output order (writing order, display order) of the right-eye picture signal DR and the left-eye picture signal DL on the input picture signal Din to produce the picture signal D1. Next, the shutter control section 42 outputs, to the shutter device 6, the control signal CTL corresponding to output timings of such a right-eye picture signal DR and such a left-eye picture signal DL. Moreover, the signal D1 outputted from the picture signal processing section 41 is supplied to the data driver 51 through the timing control section 43. The data driver 51 performs D/A conversion on the picture signal D1 to produce a picture voltage as an analog signal. Then, a display drive operation is performed by a drive voltage outputted from the gate driver 52 and the data driver 51 to each pixel 20.

More specifically, as illustrated in FIG. 2, ON/OFF actions of the TFT element 21 are switched in response to a selection signal supplied from the gate driver 52 through the gate line G. Thereby, conduction is selectively established between the data line D and the liquid crystal device 22 and the auxiliary capacitive element 23. As a result, a picture voltage based on the picture signal D1 supplied from the data driver 51 is supplied to the liquid crystal device 22, and a line-sequential display drive operation is performed.

In the pixels 20 to which the picture voltage is supplied in such a manner, illumination light from the backlight 3 is modulated in the liquid crystal display panel 2 to be emitted as display light. Thereby, a picture based on the input picture signal Din is displayed on the liquid crystal display 1. More specifically, in one frame period, a picture-for-left-eye based on the left-eye picture signal DL and a picture-for-right-eye based on the right-eye picture signal DR are alternately displayed to perform a display drive operation by a time-division drive.

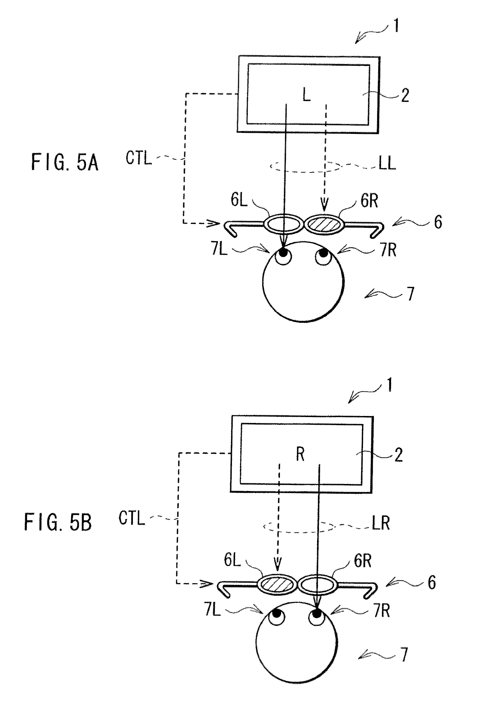

At this time, as illustrated in FIG. 5A, when the picture-for-left-eye is displayed, in the shutter device 6 used by a viewer 7, in response to the control signal CTL, a light-shielding function in the right-eye shutter 6R is turned into an effective state, and the light-shielding function in the left-eye shutter 6L is turned into an ineffective state. In other words, the left-eye shutter 6L is turned into an open state for transmission of display light LL for display of the picture-for-left-eye, and the right-eye shutter 6R is turned into a close state for transmission of the display light LL. On the other hand, as illustrated in FIG. 5B, when the picture-for-right-eye is displayed, in response to the control signal CTL, the light-shielding function in the left-eye shutter 6L is turned into an effective state, and the light-shielding function in the right-eye shutter 6R it turned into an ineffective state. In other words, the right-eye shutter 6R is turned into an open state for transmission of display light LR for display of the picture-for-right-eye, and the left-eye shutter 6L is turned in a close state for transmission of the display light LR. Then, such states are alternately repeated in a time-divisional manner, so when the viewer 7 wearing the shutter device 6 watches a display screen of the liquid crystal display, 1, a stereoscopic picture is viewable. In other words, the viewers 7 is allowed to watch the picture-for-left-eye with his left eye 7L and the picture-for-right-eye with his right eye 7R, and there is a parallax between the picture-for-left-eye and the picture-for-right-eye, so the viewer 7 perceives the picture-for-right-eye and the picture-for-left-eye as a stereoscopic picture with a depth.

### 2, Polarity inversion method on liquid crystal device in liquid crystal shutter

In the above-described stereoscopic picture display operation, in the shutter device 6, the control signal CTL supplied from the shutter control section 42 is received by the control signal reception section 63, and then is supplied to the liquid crystal device driving section 64. Then, in the liquid crystal device driving section 64, while the liquid crystal device 65 configuring the light-shielding shutter in each of the left-eye shutter 6L and the right-eye shutter 6R is driven in response to the control signal CTL, a switching operation between an opening action and a closing action for each light-shielding shutter is controlled. More specifically, while the liquid crystal device driving section 64 performs a polarity inversion method in which the polarity (a positive polarity and a negative polarity) of a drive voltage to be applied is alternately inverted, the liquid crystal device driving section 64 controls a switching operation between the opening action and the closing action. At this time, the liquid crystal device driving section 64 outputs a signal for performing such a polarity inversion method and a signal for defining open and close timings for the left-eye shutter 6L and the right-eye shutter 6R. The polarity inversion method on the liquid crystal device 65 will be described below as compared to a comparative example.

### 2-1. Polarity inversion method in comparative example

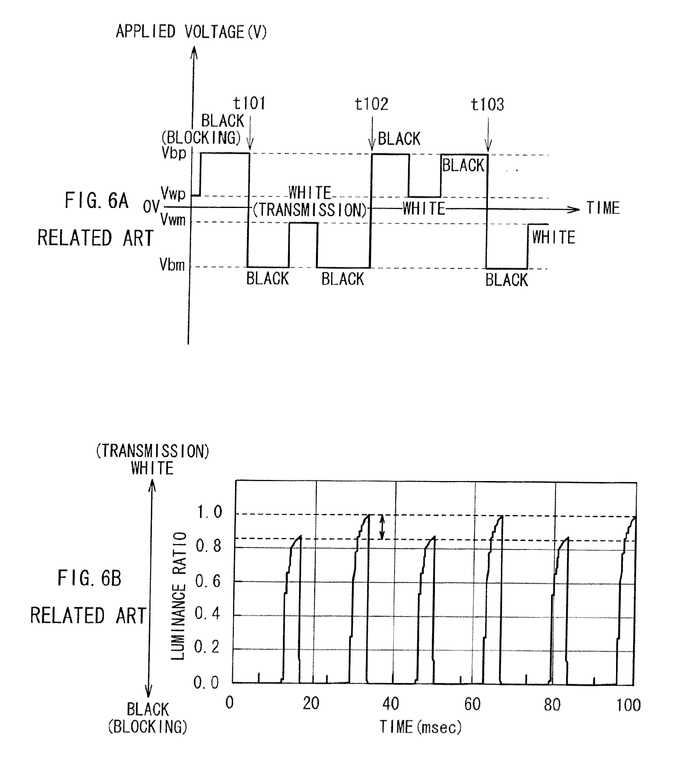

FIGs. 6A and 6B are timing charts illustrating a polarity inversion method according to a comparative example. More specifically, FIG. 6A indicates a temporal change in a drive voltage (an applied voltage) applied to the liquid crystal layer 655 in the liquid crystal device 65 (a drive voltage waveform), and FIG. 6B indicates a temporal change in a luminance ratio of display light LL or LR passing through the liquid crystal device 65 (a luminance ratio based on luminance in the positive polarity or the negative polarity, the same applies to the following description) (a response waveform). In addition, in the response waveform of the luminance ratio, a voltage Vbp, a voltage Vwp, a voltage Vbm, and a voltage Vwm indicate a black voltage of positive polarity corresponding to a voltage in a close state in the positive polarity, a white voltage of positive polarity corresponding to a voltage in an open state in the positive polarity, a black voltage of negative polarity corresponding to a voltage in a close state in the negative polarity and a white voltage of negative polarity corresponding to a voltage in an open state in the negative polarity, respectively. The same applies to the following description.

In the polarity inversion method in the comparative example, as illustrated in FIG. 6A, in a period of the closing action where the left-eye shutter 6L and the right-eye shutter 6R are in the close state (an incident light blocking state, a black state) (where the light-shielding shutter performs a closing action), the polarity of the drive voltage is inverted. More specifically, for example, as indicated by timings t101 to t103 in the drawing, in a period of the closing action where the drive voltage applied to the liquid crystal layer 655 is the black voltage Vbp of positive polarity or the black voltage Vbm of negative polarity, the polarity of the drive voltage is inverted.

However, in the case where such a polarity inversion method is performed, for example, as illustrated by an arrow in FIG. 6B, a difference in luminance (a difference in light transmittance) between polarities in the period of the opening action is large, and as a result, flickers easily occur when viewing a picture through the shutter device 6.

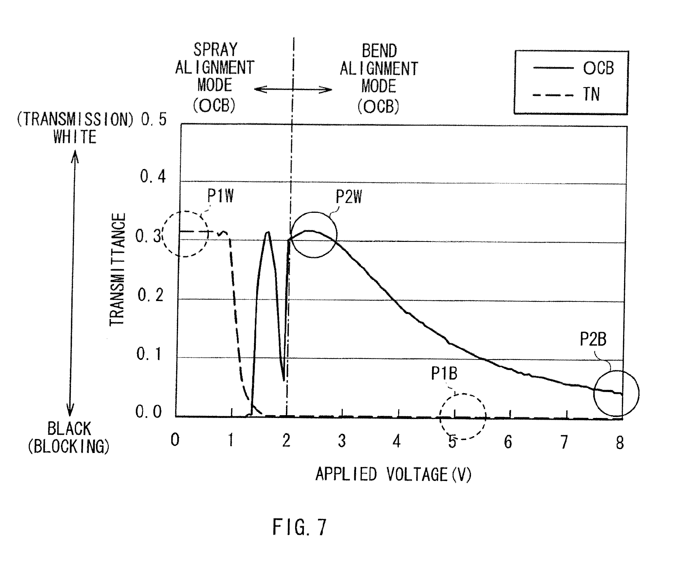

Flickers easily occur by the following reason. First, in the liquid crystal of the TN mode, for example, by a relationship between an applied voltage and light transmittance illustrated in FIG. 7, both of a white state (an open state; refer to a reference numeral P1W in the drawing) and a black state (a close state; refer to a reference numeral P1B in the drawing) are allowed to be used in a region where transmission characteristics are flat and stable. On the other hand, in the liquid crystal of the OCB mode, by a relationship which is also illustrated in FIG. 7, it is necessary for both of a white state (an open state; refer to a reference numeral P2W in the drawing) and a black state (a close state; refer to a reference numeral P2B in the drawing) to be used in a region where a curve of transmission characteristics is inclined and unstable. Moreover, unlike the liquid crystal of the TN mode, in such a liquid crystal of the OCB mode, it is necessary to apply a drive voltage in both of the white state and the black state. Then, in particular, an applied voltage in the white state indicated by the reference numeral P2W is close to a boundary (a transition point) between the above-described bend alignment state and the above-described spray alignment mode, so the white state in the OCB mode is a region where the alignment state of the liquid crystal is also unstable. Therefore, when the polarity of the drive voltage is inverted in a period of a closing action for the left-eye shutter 6L and the right-eye shutter 6R, due to an influence such as deviation of a common voltage, a difference in the applied voltage between polarities is large in the open state (the white state, the transmission state). Then, when the difference in the applied voltage between polarities in the open state (the white state) is increased, the curve of the transmission characteristics is steep in the open state (refer to the reference numeral P2W in the drawing), so a difference in luminance between polarities is increased, thereby flickers easily occur (flickers become large).

### 2-2. Polarity inversion method in embodiment

On the other hand, in the embodiment, in the liquid crystal device driving section 64 in the shutter device 6, a polarity inversion method is performed on the liquid crystal device 65 in the following manner.

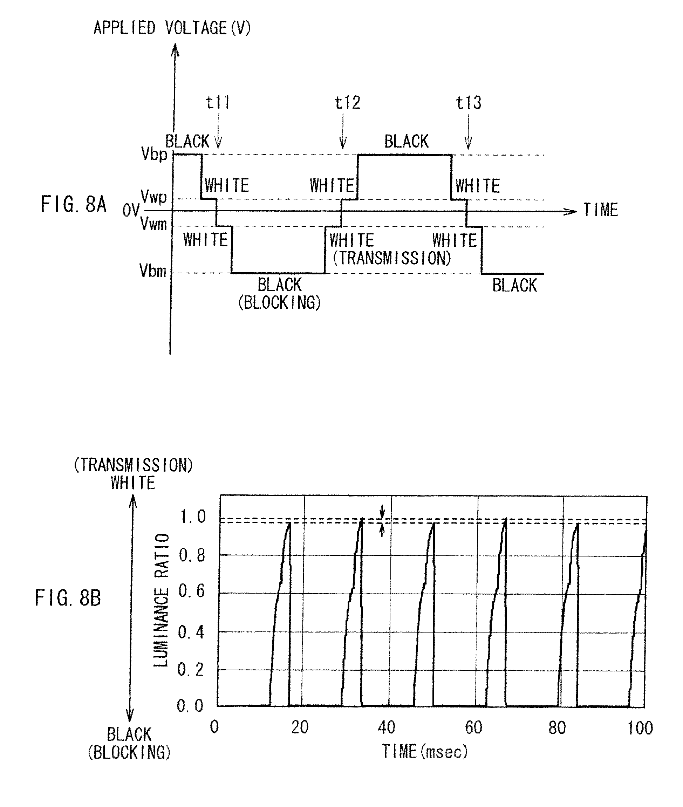

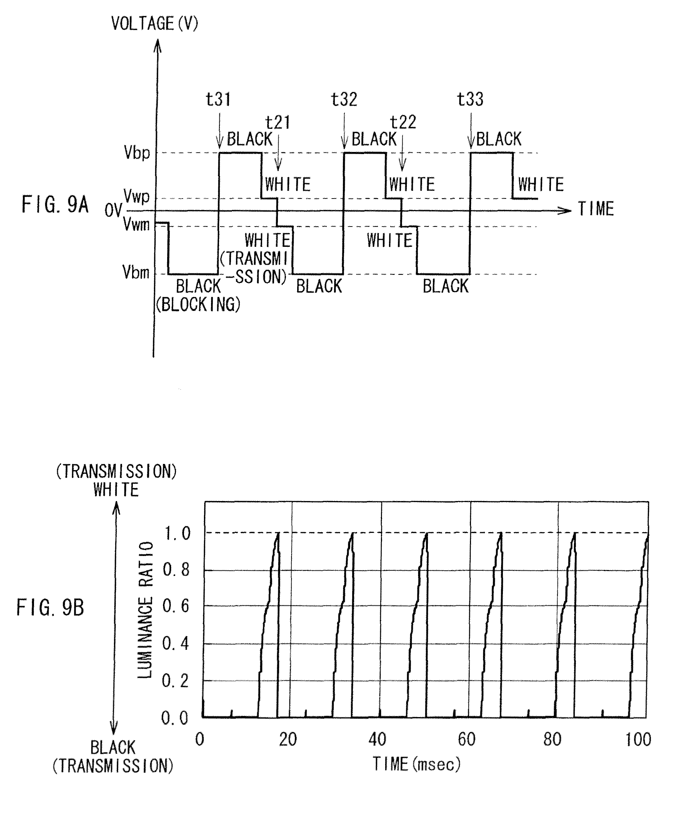

FIGs. 8A, 8B, 9A and 9B are timing charts illustrating examples of the polarity inversion method in the embodiment. More specifically, FIGs. 8A and 9A illustrate a temporal change in a drive voltage (an applied voltage) applied to the liquid crystal layer 655 in the liquid crystal device 65 (a drive voltage waveform), and FIGs. 8B and 9B illustrate a temporal change in a luminance ratio of display light LL or LR passing through the liquid crystal device 65 (a response waveform).

First, in the polarity inversion method illustrated in FIGs. 8A and 8B, as illustrated in FIG. 8A, in a period of the opening action where the left-eye shutter 6L and the right-eye shutter 6R are in an open state (a transmission state of incident light, a white state) (where the light-shielding shutter performs an opening action), the polarity of the drive voltage is inverted. More specifically, for example, as indicated by timings t11 to t13 in the drawing, in a period of the opening action where the drive voltage applied to the liquid crystal layer 655 is the white voltage Vwp of positive polarity or the white voltage Vwm of negative polarity, the polarity of the drive voltage is inverted.

Thereby, in the white state in which luminance is high, positive polarity luminance and negative polarity luminance are averaged, so compared to the above-described comparative example, in the period of the opening action, a difference in the applied voltage between polarities is reduced. As a result, for example, as indicated by an arrow in FIG. 8B, compared to the comparative example illustrated in FIG. 6B, a difference in luminance between polarities is reduced.

On the other hand, in the polarity inversion method illustrated in FIGs. 9A and 9B, as illustrated in FIG. 9A, the polarity of the drive voltage is inverted not only in the above-described period of the opening action, but also in a period of the closing action where the left-eye shutter 6L and the right-eye shutter 6R are in a close state (a blocking state of incident light, a black state). More specifically, first, for example, as indicated by timings t21 and t22 in the drawing, in the period of the opening action where the drive voltage applied to the liquid crystal layer 655 is the white voltage Vwp of positive polarity or the white voltage Vwm of negative polarity, the polarity of the drive voltage is inverted. Then, for example, as indicated by timings t31 to t33 in the drawing, in the period of the closing action where the drive voltage applied to the liquid crystal layer 655 is the black voltage Vbp of positive polarity or the black voltage Vbm of negative polarity, the polarity of the drive voltage is also inverted.

In this case, the susceptibility of liquid crystal molecules to stand up is uniform, so compared to the case of the polarity inversion method illustrated in FIGs. 8A and 8B, a difference in the applied voltage between polarities in the period of the opening action is further reduced (or eliminated). As a result, for example, as illustrated in FIG. 9B, compared to the polarity inversion method illustrated in FIG. 8B, a difference in luminance between polarities is further reduced (or eliminated).

As described above, in the embodiment, in the liquid crystal device driving section 64 in the shutter device 6, the polarity inversion method in which the polarity of the applied drive voltage is alternately inverted is performed on the liquid crystal device 65 configuring the light-shielding shatter in each of the left-eye shutter 6L and the right-eye shutter 6R. and the polarity of the drive voltage is inverted in a period of the opening action for the light-shielding shutter, so in the period of the opening action, a difference in the applied voltage to the liquid crystal device 65 between polarities is allowed to be reduced. Therefore, a difference in luminance between polarities is reduced, so flickers occurring when a displayed picture on the liquid crystal display 1 is viewed through the shutter device 6 are allowed to be reduced.

Moreover, in the case where the polarity of the drive voltage is inverted not only in a period of such an opening action but also in a period of a closing action where the left-eye shutter 6L and the right-eye shutter 6R are in a close state, a difference in the applied voltage in the period of the opening action between polarities is allowed to be further reduced (or to be eliminated), and flickers occurring when the displayed picture is viewed are allowed to be further reduced (or the occurrence of flickers is preventable).

### Modification

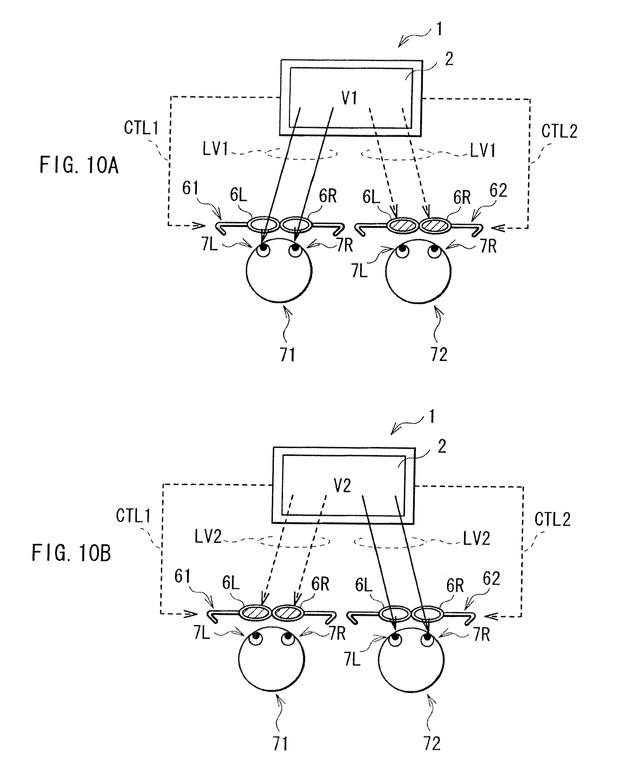

FIGs. 10A and 10B schematically illustrate a picture display operation in a picture display system (a multiview system) according to a modification of the above-described embodiment. In the modification, instead of the above-described stereoscopic picture display operation, a multiview picture display operation in which a plurality of viewers (in this case, two viewers) are allowed to view a plurality of (in this case, two) pictures which are different from each other, respectively, is performed. In addition, like components are denoted by like numerals as of the above-described embodiment and will not be further described.

In the multiview system in the modification, a first picture based on a first picture signal corresponding to a first viewer and a second picture based on a second picture signal corresponding to a second viewer are alternately displayed in a time-divisional manner. More specifically, instead of displaying the picture-for-left-eye and the picture-for-right-eye corresponding to the left-eye shutter 6L and the right-eye shutter 6R in the shutter device 6, respectively, in the modification, a plurality of pictures corresponding to respective viewers (users) are displayed.

More specifically, as illustrated in FIG. 10A, in a display period of a first picture V1, of a right-eye shutter 6R and a left-eye shutter 6L in shutter device 61 used by a viewer 71 are in an open state by a control signal CTL1. Moreover, both of a right-eye shutter 6R and a left-eye shutter 6L in shutter device 62 used by a viewer 72 are in a close state by a control signal CTL2. In other words, the shutter device 61 of the viewer 71 allow display light LV1 based on the first picture V1 to pass therethrough, and the shutter device 62 of the viewer 72 blocks the display light LV1.

On the other hand, as illustrated in FIG. 10B, in a display period of a second picture V2, both of the right-eye shutter 6R and the left-eye shutter 6L in the shutter device 62 used by the viewer 72 are in an open state by the control signal CTL2. Moreover, both of the right-eye shutter 6R and the left-eye shutter 6L in the shutter device 61 used by the viewer 71 are in a close state by the control signal CTL1. In other words, the shutter device 62 of the viewer 72 allow display light LV2 based on the second picture V2 to pass therethrough, and the shutter device 61 of the viewer 71 blocks the display light LV2.

Therefore, such states are alternately changed in a time-divisional manner, thereby two viewers 71 and 72 are allowed to view different pictures (the pictures V1 and V2), respectively (a multiview mode is achieved).

Thus, even in the case where the multiview picture display operation in the modification is performed, the polarity inversion method described in the above-described embodiment is performed on the liquid crystal device 65 in the shutter device 6, thereby the same effects as those in the above-described embodiment are obtainable.

In addition, in the modification, the case where two different pictures are viewed by two viewers, respectively, is described, but the present invention is applicable also in the case where three or more different pictures are viewed by three or more viewers, respectively. Moreover, the number of pictures and the number of shutter devices are not necessarily equal to each other. In other words, a plurality of shutter devices performing an opening action and a closing action corresponding to one picture may be prepared, and the one picture may be viewed by a plurality of viewers.

### Other modifications

Although the present invention is described referring to the embodiment and the modification, the invention is not limited thereto, and may be variously modified.

For example, in the above-described embodiment and the like, the case where mainly the liquid crystal device 65 in the shutter device 6 is configured of a liquid crystal device with use of the liquid crystal of the OCB mode is described, but the invention is not limited thereto. In other words, the invention is applicable to liquid crystal shutter device including a liquid crystal device with use of a liquid crystal of any other mode such as TN mode.

Moreover, in the above-described embodiment and the like, as an example of the picture display, the liquid crystal display including a liquid crystal display section configured by using a liquid crystal device is described, but the invention is applicable to a picture display of any other kind. More specifically, for example, the invention is applicable to a picture display using a PDP (Plasma Display Panel), an organic EL (Electro Luminescence) display or the like.

In addition, the processes described in the above-described embodiment and the like may be performed by hardware or software. In the case where the processes are performed by software, a program forming the software is installed in a general-purpose computer or the like. Such a program may be stored in a recording medium mounted in the computer in advance.

The present application contains subject matter related to that disclosed in Japanese Priority Patent Application JP 2009-185085 filed in the Japan Patent Office on August 7, 2009.

It should be understood by those skilled in the art that various modifications, combinations, sub-combinations and alterations may occur depending on design requirements and other factors insofar as they are within the scope of the appended claims or the equivalents thereof.

## Claims

1. A liquid crystal shutter device comprising:
two shutter mechanisms (6L, 6R) each including a liquid crystal device (65) and configured so as to alternately perform an opening action and a closing action in a time-divisional manner, the opening action allowing incident light to pass through corresponding one of the shutter mechanisms (6L, 6R), the closing action allowing the incident light to be blocked; and
a drive section (64) controlling a switching operation between the opening action and the closing action for each of the shutter mechanisms (6L, 6R), while driving the liquid crystal device in each of the shutter mechanisms (6L, 6R) by means of a polarity inversion method in which a polarity of a drive voltage is alternately inverted,
wherein the drive section (64) inverts the polarity of the drive voltage in a period of the opening action.

2. The liquid crystal shutter device according to claim 1, wherein
the drive section (64) also inverts the polarity of the drive voltage in a period of the closing action.

3. The liquid crystal shutter device according to claim 1, wherein
the drive section (64) controls the switching operation in each of the shutter mechanisms (6L, 6R) in response to a control signal supplied from an external picture display which performs, in a time-divisional manner, a switching of a plurality of picture streams to select one of the picture stroams and performs picture display based on the selected picture stream, so that each of the shutter mechanisms (6L, 6R) performs the opening action and the closing action in synchronization with the switching of the plurality of picture streams in the picture display.

4. The liquid crystal shutter device according to claim 3, wherein
the plurality of picture streams include a picture stream for left eye and a picture for right eye which have a parallax therebetween, and
the drive section (64) controls the switching operation so that one of the two shutter mechanisms (6L, 6R) opens in synchronization with a period in which the picture stream for left eye is selected, and the another of the two shutter mechanisms (6L, 6R) opens in synchronization with a period in which the picture stream for right eye is selected.

5. The liquid crystal shutter device according to claim 3, wherein
the plurality of picture streams include a plurality of kinds of picture streams which have different contents from each other, and
the drive section (64) controls the switching operation so that both of the two shutter mechanisms (6L, 6R) open at a time in synchronization with a period in which one of the picture streams is selected.

6. The liquid crystal shutter device according to claim 1, wherein
the liquid crystal device (65) is configured with use of a liquid crystal of an OCB mode, TN mode or STN model.

7. The liquid crystal shutter device according to claim 1, wherein
the liquid crystal device (65) is a liquid crystal device of a normally white mode in which a closing state appears under an application of voltage and opening state appears under no application of voltage.

8. A picture display system having a picture display performing, in a time-divisional manner, a switching of a plurality of picture streams to select one of the picture streams and performs picture display based on the selected picture stream, and one or more liquid crystal shutter devises (6) each performing an opening action and a closing action in synchronization with the switching of the plurality of picture streams in the picture display, each of the liquid crystal shutter devices (6) being according to claim 1.

9. The picture display system to claim 8, wherein
the plurality of picture streams include a picture stream for left eye and a picture stream for right eye which have a parallax therebetween, and
the drive section (64) controls the switching operation so that one of the two shutter mechanisms (6L, 6R) opens in synchronization with a period in which the picture stream for left eye is selected, and another of the two shutter mechanisms (6L, 6R) opens in synchronization with a period in which the picture stream for right eye is selected.

10. The picture display system according to claim 8, wherein
the picture display is a liquid crystal display.
